# EUROPÄISCHE PATENTSCHRIFT

(11) **EP 1 344 875 B1**
(45) Veröffentlichungstag und Bekanntmachung des Hinweises auf die Patenterteilung: **18.01.2006**
(21) Anmeldenummer: 03090056.7
(22) Anmeldetag: 11.03.2003
(51) Int. Cl.: E04B 1/64, B32B 15/08, E04D 12/00

(54) **Dampf- und Windsperrbahn**
Moisture and wind barrier building membrane
Membrane pour la construction avec propriétés de Barrière à l'humidité et au vent

(30) Priorität: 16.03.2002 DE 20204245 U
(43) Veröffentlichungstag der Anmeldung: 17.09.2003
(73) Patentinhaber: VEDAG GmbH, 60388 Frankfurt (DE)
(72) Erfinder: Hörnig, Andreas Dr., 91332 Heiligenstadt (DE); Scherp, Ernst Dipl.-Ing., 63486 Bruchköbel (DE); Schuhmacher, Wilfried Dipl.Kaufm., 63165 Mühlheim (DE)
(74) Vertreter: Berkenfeld, Helmut

(56) Entgegenhaltungen:
- WO-A-91/18738
- DE-A- 2 849 246
- DE-U- 29 801 546
- GB-A- 2 181 389

## Beschreibung

Die Erfindung betrifft eine Dampf- und Windsperrbahn mit einem hohen Schutz und Begrenzung der Brandweiterleitung sowie Nichtbeteiligung am Brandgeschehen.

Dampf- und Windsperrbahnen sind allgemein bekannt, so ist eine solche Bahn in der DE-2009 843 A1 beschrieben, bei der eine Metallfolie mit einer Bitumenbahn verklebt ist und mit Heißbitumen auf dem Untergrund verklebt werden kann. Bei einer weiteren bekannten Bahn dieser Gattung (DE-U-910338) sind beschichtete Metallfolien mit selbstklebenden Polymerbitumen ausgerüstet und können unmittelbar auf den Untergrund geklebt werden. DE 298 01 546U offenbart eine Dampfsperrbahn bestehend aus einer Metallfolie, die ein- oder beidseitig mit einem Gewebe oder Vliesen verstärkt ist. Die Dampfsperrbahn enthält eine bituminöse Selbstklebeschicht. Derartige Dachdampfsperrbahnen werden insbesondere im Flachdachbereich unter Dämmschichten eingesetzt und sind fest mit dem Untergrund verbunden. Beim heutigen Stand der Technik liegen diese Bahnen in Dicken von 1,2 bis 5 mm vor..Alle bis heute auf dem Markt befindlichen Bahnen bringen jedoch eine hohe Brandlast mit und tragen dem baulichen Brandschutz großflächiger Industriedächer nicht im heute gewünschten Maß Rechnung.

Dampfsperren oder Luftdichtigkeitssperren, die nach DIN 18234-1 eingesetzt werden dürfen, bestehen aus max. 0,12 mm dicken Kunststoff-Aluminium-Verbundfolien oder 0,25 mm dicken Polyethylenfolien. Diese müssen mit doppelseitigen Klebebändern und hohem Zeitaufwand verklebt und überklebt werden.

Aufgabe der Erfindung war es, eine Dampf- und Windsperrbahn zu entwickeln, die eine geringstmögliche Brandlast besitzt, sich schnell und einfach verlegen läßt und deren Energieinhalt unter dem Grenzwert, <10,5 MJ/m², gemäß DIN 18234 angesiedelt ist.

Erfinderisch hat sich herausgestellt, daß die Dampfsperrbahnen optimalerweise mit einem Verbundmaterial wie z.B. aus einer Metallfolie, geschützt mit Lacken oder Folien, einseitig oder beidseitig, aus anorganisch/organisch aufgebauten Gittern verstärkt und mit partiell oder vollflächig beschichteten schwer entflammbaren Klebern oder über Wärmezufuhr verklebbare Schichten als optimale Schutzbahn aufgebaut sein muß, um nicht nur den Anforderungen an das Produkt- und Bandschutzprofil sondern auch der problemlosen Verarbeitung gerecht zu werden.

In einer weiteren Ausfürung konnte gefunden werden, daß reine Metallfolien zwischen 20 und 50 µm Dicke als Träger oder in noch dünnerer Form auf organische Folien verklebt oder in aufgedampfter Form zwischen organischen Folien sinnvoll einsetzbar sind. Vorteilhaft als Metallträger sind Aluminium- oder Kupferfolien, das gleiche gilt auch für aufgedampfte Versionen.

Um eine gute Verarbeitbarkeit der erfindungsgemäßen Dampf-/Windsperrbahn zu gewährleisten, kann ein anorganisches/organisches Gitter- oder Gewebesystem wie z.B. Glasgelege, Glasgewebe oder Glasvliese zukaschiert werden. Systeme aus Kunststoffen sind zwar möglich, erhöhen aber sehr stark den Energieinhalt der Bahnenkonfiguration.

Die Ausrüstung der Bahn mit selbstklebeschichten, einseitig oder beidseitig, bestehen vorzugsweise aus einem Acrylat, aus Botylkautschuken sowie aus Polymerbitumen als Basis mit entsprechend hohem Anteil an Füllern und notwendigen Branschutzmitteln. Diese Selbstklebeschichten können sowohl vollflächig als auch streifenweise oder punktweise auf die Bahn aufgebracht sein. Die notwendigen Abziehfolien auf den Klebeschichten können sowohl vollflächig, als auch perforiert streifenweise zugeordnet und entsprechend vollflächig oder streifenweise abgezogen werden.

Überraschend wurde durch Kombination der 3 Rohstoffsäulen gefunden, daß eine hochstabile trittfestsichere Dampfsperr-/Windschutzbahn von 0,3 bis 0,6 mm Dicke nur einen Energieinhalt von <10,5 MJ/m² besitzt und bis 5 MJ/m², je nach Anforderung, reduziert werden kann. Die Baustoffklasse von mindestens B2 nach DIN 4102-1 und die Anforderung an den Brandschutz großflächiger Dächer, Brandbeanspruchung von unten werden voll erfüllt.

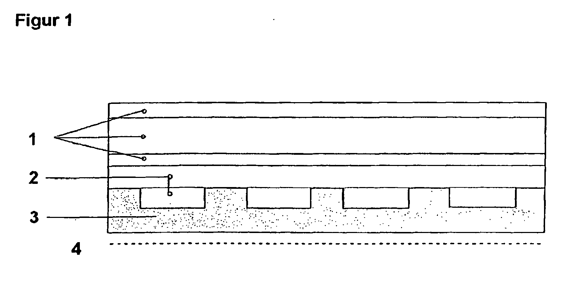

Das Beispiel in der nachfolgenden Zeichnung (Figur 1) soll die Erfindung näher beschreiben:

Das mit Lack und Kleber kombinierte Metallband in einer Gesamtdicke von 37 µm (1) wird mit einem anorganischen Gittergelege/-gewebe (2) fest verbunden (2). In das Gittergelegel-gewebe wird ein Spezialkleber voll eingebettet (3) und mit einer Abziehfolie (4) abgedeckt. Die Klebeschicht kann sowohl vollflächig als auch partiell aufgebracht sein. Der Energieinhalt beträgt hier bei einer Dicke von 0,41 mm 9,6 MJ/m². Bei der partiell ausgerüsteten Kleberbeschichtung liegt der Energieinhalt bei ca. 6800 MJ/m².

## Patentansprüche

1. Dampf- und Windsperrbahn für den baulichen Brandschutz, **dadurch gekennzeichnet, daß** sie aus einer durch Folien, Vlies oder anorganisches/organisches Gitter/Gewebe trittfest und weiterreißfest armierten dampf- und windsperrenden Metall- oder Kunststoff-Folie besteht und ein- oder beidseitig mit voll- oder teilflächigen Selbstklebeschichten ausgerüstet ist und die Bahn eine geringe Brandlast aufweist, mit einem Energieinhalt, der unter 10,5 MJ/M² liegt.

2. Dampf- und Windsperrbahn nach Anspruch 1., **dadurch gekennzeichnet, daß** die dampf- und windsperrende Metall- oder Kunststoff-Folie eine Dicke von >20 µm aufweist.

3. Dampf- und Windsperrbahn nach Anspruch 1. **dadurch gekennzeichnet, daß** die dampf- und windsperrende Metall- oder Kunststoff-Folie eine Dicke <20 µm aufweist und ein- oder beiseitig mit Kunststoff-Folien oder -Lacken armiert ist.

4. Dampf- und Windsperrbahn nach einem der Ansprüche 1. bis 3., **dadurch gekennzeichnet, daß** eine Metallisierung über Metallbedampfung zwischen zwei Kunststoff-Schichten vorgenommen und als dampfdichte Schicht eingesetzt wird.

5. Dampf- und Windsperrbahn nach Anspruch 1. bis 4., **dadurch gekennzeichnet, daß** die anorganische/organische Gitter-Gewebestruktur aus äußerst dünnen Fäden besteht.

6. Dampf- und Windsperrbahn nach einem der Ansprüche 1. bis 5., **dadurch gekennzeichnet, daß** die Selbstklebeschichten flammhemmend ausgerüstet sind.

7. Dampf- und Windsperrbahn nach einem der Ansprüche 1. bis 6., **dadurch gekennzeichnet, daß** die Selbstklebeschichten vollflächig ausgebildet und mit einer Abziehfolie abgedeckt sind.

8. Dampf- und Windsperrbahn nach einem der Ansprüche 1. bis 7., **dadurch gekennzeichnet, daß** die Selbstklebeschicht teilpartiell oder streifenweise aufgebracht wird und mit einer Abziehfolie abgedeckt ist.

9. Dampf- und Windsperrbahn nach einem der Ansprüche 1. bis 8., **dadurch gekennzeichnet, daß** die getrennte oder perforierte Abziehfolie je nach Erfordernis partiell abziehbar ist.

## Claims

1. A wind and smoke insulation membrane for fire prevention in construction,
**characterised in that**
it is made from smoke- and wind-impermeable metal or plastic foil that is reinforced with films, non-woven fabric or inorganic/organic mesh/tissue to be resistant to crushing and tear propagation and is furnished over part or all of the surface on one or both sides with self-adhesive layers, and the membrane has a low fire load, with an energy content below 10.5 mJ/m².

2. The wind and smoke insulation membrane as cited in claim 1,
**characterised in that**
the smoke- and wind-impermeable metal or plastic foil has a thickness of >20 µm.

3. The wind and smoke insulation membrane as cited in claim 1,
**characterised in that**
the smoke- and wind-impermeable metal or plastic foil has a thickness of <20 µm and is reinforced on one or both sides with plastic films or varnishes.

4. The wind and smoke insulation membrane as cited in any of claims 1 to 3,
**characterised in that**
a metallization is carried out via metal sputtering and is inserted as a smoke-impermeable layer between two plastic layers.

5. The wind and smoke insulation membrane as cited in any of claims 1 to 4,
**characterised in that**
the inorganic/organic mesh/tissue structure is made from extremely thin fibres.

6. The wind and smoke insulation membrane as cited in any of claims 1 to 5,
**characterised in that**
the self-adhesive layers are equipped to be flame-retardant.

7. The wind and smoke insulation membrane as cited in any of claims 1 to 6,
**characterised in that**
the self-adhesive layers are designed to cover the entire surface and are covered with a peel-off film.

8. The wind and smoke insulation membrane as cited in any of claims 1 to 7,
**characterised in that**
the self-adhesive layer is applied in segments or strips and is covered with a peel-off film.

9. The wind and smoke insulation membrane as cited in any of claims 1 to 8,
**characterised in that**
the separated or perforated peel-off film is partially removable by peeling according to requirements.

## Revendications

1. Bande anti-vapeur et anti-bruit pour la protection contre l'incendie des bâtiments, **caractérisée en ce qu'**elle est composée d'un film en métal ou en matière plastique barrant la vapeur et le vent, armé de manière à résister à la pénétration et au déchirement supplémentaire au moyen de film, de non-tissé ou d'un grillage/textile inorganique/organique et est équipée sur une ou deux faces de couches autocollantes sur tout ou partie de sa surface et que la bande présente une faible charge d'incendie avec une teneur énergétique qui se situe en dessous de 10,5 MJ/m².

2. Bande anti-vapeur et anti-bruit selon la revendication 1, **caractérisée en ce que** le film en métal ou en matière plastique barrant la vapeur et le vent présente une épaisseur > 20 µm.

3. Bande anti-vapeur et anti-bruit selon la revendication 1, **caractérisée en ce que** le film en métal ou en matière plastique barrant la vapeur et le vent présente une épaisseur < 20 µ et est armé sur une face ou les deux au moyen de films ou de vernis en matière plastique.

4. Bande anti-vapeur et anti-bruit selon une des revendications 1 à 3, **caractérisée en ce qu'**une métallisation est réalisée par vaporisation de métal entre deux couches de matière plastique et est utilisée comme couche étanche à la vapeur.

5. Bande anti-vapeur et anti-bruit selon les revendications 1 à 4, **caractérisée en ce que** la structure en grillage/textile inorganique/organique consiste en fils extrêmement fins.

6. Bande anti-vapeur et anti-bruit selon une des revendications 1 à 5, **caractérisée en ce que** les couches autocollantes sont équipées de manière à être inhibitrices de flammes.

7. Bande anti-vapeur et anti-bruit selon une des revendications 1 à 6, **caractérisée en ce que** les couches autocollantes sont réalisées sur toute la surface et sont recouvertes d'un film détachable.

8. Bande anti-vapeur et anti-bruit selon une des revendications 1 à 7, **caractérisée en ce que** la couche autocollante est appliquée partiellement ou en bandes et est recouverte d'un film détachable.

9. Bande anti-vapeur et anti-bruit selon une des revendications 1 à 8, **caractérisée en ce que** le film détachable divisé ou perforé est détachable partiellement en fonction des besoins.
